# EUROPÄISCHE PATENTSCHRIFT

(11) **EP 1 480 916 B1**
(45) Veröffentlichungstag und Bekanntmachung des Hinweises auf die Patenterteilung: **17.08.2005**
(21) Anmeldenummer: 03704597.8
(22) Anmeldetag: 12.02.2003
(51) Int. Cl.: C03B 23/20, B65D 39/00, B65D 1/02

(54) **FLASCHE, VERFAHREN ZU DEREN HERSTELLUNG, VERFAHREN ZUM ABFüLLEN IN EINE FLASCHE UND VERFAHREN ZUM öffnen EINER FLASCHE**
BOTTLE, METHOD FOR THE PRODUCTION THEREOF, METHOD FOR FILLING A BOTTLE, AND METHOD FOR OPENING A BOTTLE
BOUTEILLE, SON PROCEDE DE FABRICATION, PROCEDE DE REMPLISSAGE D'UNE BOUTEILLE, ET PROCEDE D'OUVERTURE D'UNE BOUTEILLE

(30) Priorität: 07.03.2002 DE 10209990
(43) Veröffentlichungstag der Anmeldung: 01.12.2004
(73) Patentinhaber: Gantenbrink, Rudolf, 81925 München (DE)
(72) Erfinder: Gantenbrink, Rudolf, 81925 München (DE)
(74) Vertreter: Grünecker, Kinkeldey, Stockmair & Schwanhäusser Anwaltssozietät
(86) Internationale Anmeldenummer: PCT/EP2003/001379
(87) Internationale Veröffentlichungsnummer: WO 2003/074438

(56) Entgegenhaltungen:
- GB-A- 1 217 422
- US-A- 2 009 738
- US-A- 2 462 988
- US-A- 4 111 324
- US-A- 5 944 208

## Beschreibung

Die Erfindung bezieht sich auf ein Verfahren zum Herstellen von Flaschen, insbesondere Getränkeflaschen, die einen Flaschengrundkörper und einen Verschlußkörper aufweisen, wobei der Flaschengrundkörper aus Glas besteht, wobei man den Verschlusskörper ebenfalls aus Glas herstellt. Die Erfindung bezieht sich zudem auch auf eine solche Flasche sowie ein Verfahren zum Abfüllen von Getränken in eine solche Flasche.

Derartige Glasflaschen werden seit langem für die Lagerung von Getränken verwendet. Zum Verschließen solcher Flaschen dienten sog. Kronkorken, Schraubverschlüsse und dergleichen. Zum Verschließen von Wein- oder Champagnerflaschen wird in der Regel Kork verwendet. Gerade bei hochwertigen und teuren Rotweinen, Weißweinen und Champagner werden Naturkorken verwendet. Kork als Naturprodukt kann Bakterien und Pilzsporen enthalten, die sich auch bei chemischer Behandlung des Korks nicht in jedem Falle mit Sicherheit abtöten lassen. Gerade bei Langzeitlagerung können Bakterien und Pilzsporen zu Fäulniserscheinungen führen, deren Geschmack sich auf den Wein überträgt.

Aus dem britischen Patent GB-A-1217422 ist eine Methode und ein Apparat zum Befüllen von geschlossenen Ampullen bekannt.

Ein weiteres Problem ist, dass heutzutage besonders teure Weine auch gefälscht werden, d.h. dass leere Originalflaschen mit einem billigeren Wein gefüllt und einem "Originalkorken" wiederverschlossen werden.

Aus der Druckschrift US-A-2 462 988 ist ein Glascontainer mit einem Glasverschluss bekannt. Der Glasverschluss wird mit dem Container, welcher als Flasche ausgebildet ist, verschmolzen. Der Glasverschluss wird über den Flaschenhals gestülpt und am Ende des Glasverschlusses mit einem Flansch der Flasche verschmolzen. Eine Sollbruchstelle ist oberhalb des Verbindungsbereiches von Glasverschluss und Glasflasche offenbart. Diese Sollbruchstelle muss aufwendig, zusätzlich zum Verbindungsprozess, eingebracht werden.

Aus der US-Druckschrift US-A-4 111 324 ist ein verschlossener Plastikbehälter bekannt. Über den Verschluss des Plastikbehälters wird eine Plastikschutzkappe gestülpt, welche dann mit dem Plastikbehälter, unter Herstellung einer Sollbruchstelle verbunden wird.

Es ist Aufgabe der vorliegenden Erfindung, eine Flasche zur Verfügung zu stellen, bei der die o.g. Nachteile nicht auftreten, die zudem insbesondere dicht verschließbar und weitestgehend fälschungssicher ist.

Diese Aufgabe wird erfindungsgemäß dadurch gelöst, dass man den Verschlußkörper unter Erzeugung einer Soll-Bruchstelle monolithisch mit dem Flaschengrundkörper verbindet.

Die auf diese Weise verschlossene Getränkeflasche besteht zu 100% aus chemisch neutralem Glas. Durch das monolithische Verbinden zwischen Verschlußkörper und Flaschengrundkörper entsteht eine amorphe gasdichte Verbindung, wodurch der Einsatz von jeglichen Dichtungsmaterialien entfällt. Nach dem Öffnen der Flasche, d.h. nach dem Zerstören der Soll-Bruchstelle ist ein Wiederverschließen durch den Konsumenten nicht mehr möglich, wodurch ein hoher Grad an Fälschungssicherheit gewährleistet ist.

Gemäß einer bevorzugten Ausführung erfolgt das monolithische Verbinden durch einen Aufschmelzprozeß.

Der Flaschengrundkörper selbst weist in bevorzugter Weise einen Flaschenhals auf, der an seinem offenen Ende zur Aufnahme des Verschlußkörpers eine Stufenbohrung aufweist, dergestalt, dass die Soll-Bruchstelle zwischen der nach innen ragenden Stufe des Flaschengrundkörpers und dem Verschlußkörper gebildet ist. Auf diese Weise schützt der Flaschenhals die Soll-Bruchstelle, so dass auch bei unsachgemäßem Gebrauch eine etwaige Verletzungsgefahr, beispielsweise beim Ansetzen der Flasche an die Lippen, vermieden wird. Günstig ist auch, wenn zur Bildung der Soll-Bruchstelle der Verbindungsbereich zwischen dem Flaschengrundkörper und dem Verschlußkörper durch eine auf einer Fläche stehende Kante gebildet wird, wobei die Wandstärke des Flaschengrundkörpers im Bereich des Flaschenhalses, ebenso wie die Wandstärke des Verschlußkörpers verhältnismäßig groß ist, während die Wandstärke der Soll-Bruchstelle demgegenüber klein ist. Durch diese Ausbildung der Soll-Bruchstelle lassen sich an sich widerstreitende Forderungen erfüllen, dass nämlich der Flaschenhals eine ausreichende mechanische Festigkeit aufweist, was durch die verhältnismäßig große Wandstärke erreicht wird, dass andererseits die Soll-Bruchstelle dünnwandig ist, um ein Abreißen des Verschlußkörpers vom Flaschengrundkörper beim Öffnen der Flasche zu erleichtern.

Durch die Ausbildung einer Kante-/Fläche-Verbindung wird zudem erreicht, dass an der Soll-Bruchstelle beidseitig eine Kerbe vorgesehen ist, die beim Aufbringen von Kräften auf den Verschlußkörper zu einer Spannungskonzentration in der Soll-Bruchstelle führt, was ein definiertes und sauberes Abreißen des Verschlußkörpers an der Soll-Bruchstelle erleichtert.

Bevorzugterweise beträgt die Wandstärke des Flaschenhalses und des Verschlußkörpers im Bereich der Soll-Bruchstelle mindestens 4mm.

Zum Öffnen der Flasche ist es günstig, wenn der Verschlußkörper mit Abstand zu dem freien Ende des Flaschenhalses des Flaschengrundkörpers einen radial abstehenden, umlaufenden Flansch aufweist. Zwischen das freie Ende des Flaschenhalses und dem umlaufenden Flansch des Verschlußkörpers kann ein Werkzeug eingeführt werden, welches zum Abheben des Verschlußkörpers dient.

Gemäß einer bevorzugten Ausführungsform der Erfindung weist der Verschlußkörper in seinem Bereich oberhalb des Flansches einen dünnwandigen Befüll- und Verschließabschnitt auf, der zum Befüllen der Flasche stimseitig offen und nach Befüllen der Flasche ähnlich einer Ampulle durch Hitzeeinwirkung zu einer Kalotte verschließbar ist. Auf diese Weise ist es möglich, den Verschlußkörper mit dem Flaschengrundkörper bereits zu verbinden, bevor die Flasche gefüllt wird. Dadurch kann ein Aufschmelzprozeß verwendet werden, durch den der Flaschengrundkörper erwärmt wird, ohne dass sich das negativ auf einen Flascheninhalt auswirken würde. Bei der bevorzugten Ausführungsform muß lediglich ein dünnwandiger Abschnitt des Verschlußkörpers, der zudem weit vom Flascheninhalt beabstandet ist, verschlossen werden. Die hierzu erforderlichen Verfahren sind aus der Ampullentechnologie bekannt. Aufgrund der Dünnwandigkeit des Abschnittes, ähnlich wie bei einer Ampulle, ist die Hitzeeinwirkung auf das Produkt nahezu vemachlässigbar.

Gemäß einer Weiterbildung der Erfindung weist der Befüll- und Verschließabschnitt des Verschlußkörpers vor dem Verbinden mit dem Flaschengrundkörper die Form eines geschlossenen Torpedos auf. Auf diese Weise kann der Verschlußkörper durch Blasformen hergestellt werden, wobei neben dem relativ dickwandigen, dem Flaschenhals des Flaschengrundkörpers zugewandten Teil bis einschließlich Flansch im Blasformvorgang auch der dünnwandige Befüll- und Verschließabschnitt hergestellt werden kann. Der Vorteil bei dieser Art der Herstellung ist, dass der Verschlußkörper, wenn er nun monolithisch mit dem Flaschengrundkörper verbunden wird, dazu führt, dass die Flasche hermetisch abgeschlossen ist. Wenn die Flaschen in diesem Zustand von dem Flaschenhersteller zu dem Weingut oder dem Abfüller geliefert werden, sind sie von Umwelteinflüssen abgeschirmt. Es ist daher nicht möglich, dass, wie bisher, Regenwasser, Insekten oder Staub eindringen können. Ein Spülvorgang, der selbst wiederum Rückstände von Reinigungsmitteln in den Flaschen hinterlassen würde, wird daher entbehrlich.

Vor dem Befüllen der Flaschen im Weingut oder bei dem Flaschenabfüller muß der Befüll- und Verschließabschnitt geöffnet werden. Dies ist auf besonders einfache Weise dann möglich, wenn der als Torpedo ausgeformte Befüll- und Verschließabschnitt des Verschlußkörpers mit einer umlaufenden Schwächungslinie ausgebildet ist, mit Hilfe welcher die Spitze des Torpedos zum Befüllen der Flasche abgesprengt werden kann.

Die Flasche kann dann mit herkömmlichen Verfahren, durch Einführen einer Überfüllanze, befüllt werden, wonach gemäß einer bevorzugten Ausführungsform danach der Befüll- und Verschließabschnitt des Verschlußkörpers nach Art einer Ampulle durch Hitzeeinwirkung verschlossen wird. Die Flasche ist nunmehr gasdicht verschlossen, sie besteht aus einem einheitlichen Material, welches chemisch mit dem Inhalt der Flasche nicht reagiert.

Zum Öffnen kann zwischen das stimseitig freie Ende des Flaschenhalses des Grundkörpers und dem radial abstehenden Flansch des Verschlußkörpers ein Werkzeug eingeführt werden, welches durch Aufbringen einer axialen Kraft auf den Verschlußkörper den Verschlußkörper von der nach innen gerichteten Stufe des Flaschenhalses abreißt.

Im folgenden wird ein Ausführungsbeispiel der Erfindung anhand einer Zeichnung näher erläutert. Es zeigen:
- Fig. 1: den oberen Teil des Flaschengrundkörpers einer erfindungsgemäßen Glasflasche,
- Fig. 2: den Grundkörper aus Fig. 1 mit einem Verschlußkörper, vor dem Aufsetzen desselben,
- Fig. 3: den Flaschengrundkörper aus Fig. 2 mit verschmolzenem Verschlußkörper aus Fig. 2,
- Fig. 4: die Flasche aus Fig. 3 mit abgenommer Spitze des Befüll- und Verschließbereichs des Verschlußkörpers,
- Fig. 5: die Flasche aus Fig. 4 mit eingeführter Befüllanze, beim Befüllen,
- Fig. 6: die inzwischen befüllte Flasche, bei der der Befüll- und Verschließabschnitt erhitzt wird,
- Fig. 7: die Flasche aus Fig. 6 mit aufgesetztem Formwerkzeug zum Verschließen des Befüll- und Verschließabschnittes,
- Fig. 8: die verschlossene Flasche,
- Fig. 9: die Flasche aus Fig. 8 mit einer aufgesetzten Schutzkappe, und
- Fig. 10: eine Seitenansicht des Verschlußbereichs der Flasche mit einer aufgesetzten Manschette.

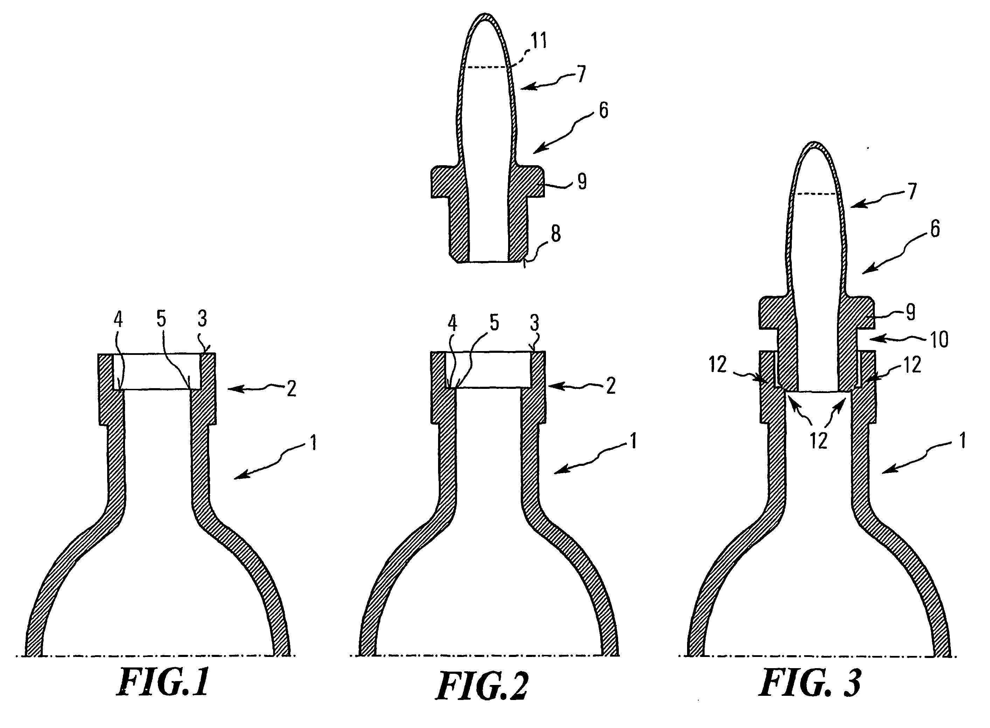

Aus den Schnittansichten gemäß den Figuren 1 bis 9 geht hervor, dass der Flaschengrundkörper 1 im wesentlichen einer handelsüblichen Flasche, beispielsweise Weinflasche, entspricht. Im Bereich des Flaschenhalses 2 ist mit Abstand zu dessem stimseitigen offenen Ende 3 eine nach innen gerichtete Stufe 4 vorgesehen, die eine umlaufende Kante 5 bildet. Der Flaschengrundkörper weist im Bereich des Flaschenhalses eine Wandstärke von etwa 4mm auf. Der Flaschengrundkörper besteht, wie handelsübliche Weinflaschen auch, aus amorphen Glas.

In Fig. 2 ist der Verschlußkörper 6 dargestellt, der, ebenso wie die Flasche, ein rotationssymmetrisches Teil ist. Dieser Verschlußkörper 6 wird durch Blasen hergestellt, wobei in einem Zuge der relativ dickwandige, dem Flaschenhals des Flaschengrundkörpers 1 zugewandte Teil ausgebildet wird, und darüber hinaus auch ein torpedoförmig ausgebildeter dünnwandiger Befüll- und Verschließabschnitt 7.

Der Verschlußkörper 6 weist in seinem unteren Bereich einen Bereich auf, dessen Außendurchmesser geringer ist als der Innendurchmesser der Stufenbohrung des Flaschenhalses. An seinem stimseitigen Ende weist der Verschlußkörper eine umlaufende Kegelmantelabschnittsfläche 8 auf, die mit der Kante 5 der Stufe 4 korrespondiert (vgl. Fig. 3).

Mit Abstand zu dem unteren stimseitigen Ende des Verschlußkörpers 6 ist einstückig ein radial abstehender umlaufender Flansch 9 angeformt, dessen Außendurchmesser im wesentlichen dem Außendurchmesser des Flaschenhalses 2 entspricht. Dabei ist der Abstand der Unterseite des Flansches 9 bis zum stimseitigen unteren Ende des Verschlußkörpers 6 größer gewählt, als der Abstand zwischen der Stufe 4 und dem oberen stimseitigen Ende 3 des Flaschenhalses 2. Dadurch entsteht zwischen dem Flansch 9 und dem stimseitig offenen Ende 3 des Flaschenhalses ein Spalt 10, dessen Bedeutung später noch erläutert wird.

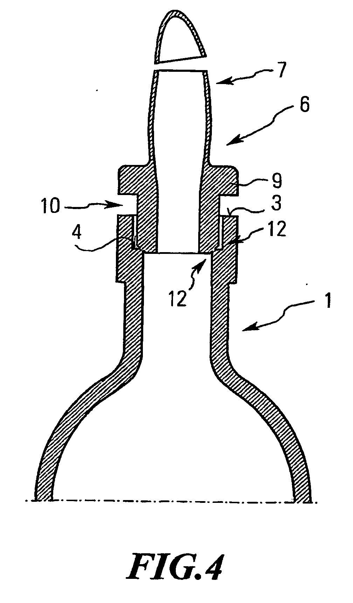

Am oberen Ende des Befüll- und Verschlußabschnittes 7 des Verschlußkörpers 6 ist eine Schwächungslinie 11 miteingeformt, die ein Absprengen der Spitze des Befüll- und Verschlußabschnittes erleichtert (vgl. Fig. 4).

Im folgenden wird die Wirkungs- und Funktionsweise der Erfindung anhand des Herstellungs- und Befüllvorganges näher erläutert.

Die soeben beschriebenen Flaschengrundkörper 1 und Verschlußkörper werden noch beim Flaschenhersteller miteinander verbunden. Dies geschieht durch einen glastechnischen Aufschmelzungsschritt, wobei die Kante 5 der Stufe 4 des Flaschengrundkörpers mit der umlaufenden Kegelmantelabschnittsfläche 8 des Verschlußkörpers verschweißt wird. Hierdurch entsteht eine Soll-Bruchstelle 12, die beidseitig von jeweils umlaufenden Kerben eingerahmt ist, die eine Konzentration von Spannungsspitzen auf die Soll-Bruchstelle sicher stellt. Die leere Flasche ist nunmehr, wie in Fig. 3 ersichtlich, hermetisch abgeschlossen und wird in diesem Zustand zum Weingut bzw. zum Getränkeabfüller transportiert.

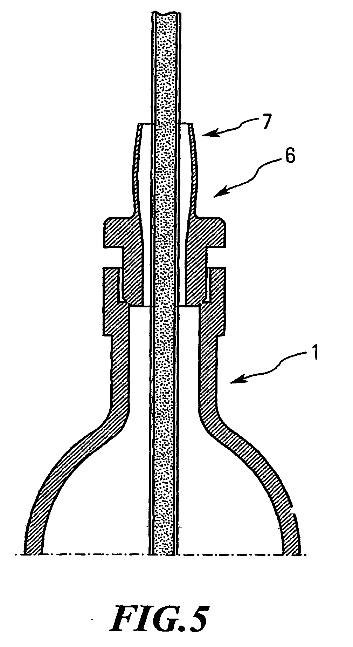

Dort wird die Spitze des Befüll- und Verschlußabschnittes 7 des Verschlußkörpers 6 durch mechanische Einwirkung abgetrennt. Aufgrund der Schwächungslinie 11 ist dies einfach möglich. Das Einformen derartiger Schwächungslinien ist aus der Ampullentechnologie bekannt. Die so geöffnete Flasche muß nicht gereinigt werden, da ihr Inneres aufgrund der Anlieferung im geschlossenen Zustand frei von irgendwelchen Umwelteinflüssen ist. Die Flasche wird nunmehr, wie in Fig. 5 zu sehen ist, auf herkömmliche Weise befüllt.

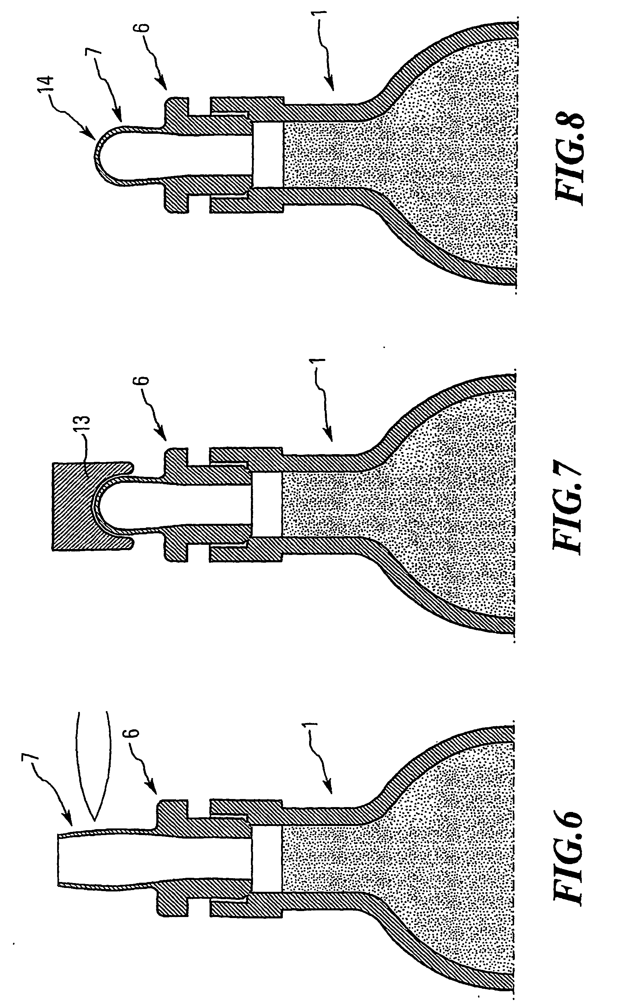

Ist die Flasche gefüllt (vgl. Fig. 6) wird der nunmehr offene Befüll- und Verschlußabschnitt 7 erhitzt, und, wie aus Fig. 7 ersichtlich ist, mit Hilfe eines Formwerkzeuges 13 zu einer Kalotte 14 verschlossen (vgl. Fig. 8). Aufgrund der Materialstärkenwahl beim Verschlußkörper 6 führt die Erhitzung des dünnwandigen Befüll- und Verschlußabschnittes 7 und dessen Verschließen zu der Kalotte 14 nicht zu Erwärmung des Inhaltes. Der Grund dafür liegt darin, dass der dickwandige Flansch 9 eine Art thermische Sperre bildet.

Die in Fig. 8 gezeigte Flasche ist nun fertig verschlossen und geeignet, den Inhalt über viele Jahre zu lagem, ohne dass der Inhalt irgendwelchen chemischen Prozessen oder Umwelteinflüssen ausgesetzt ist.

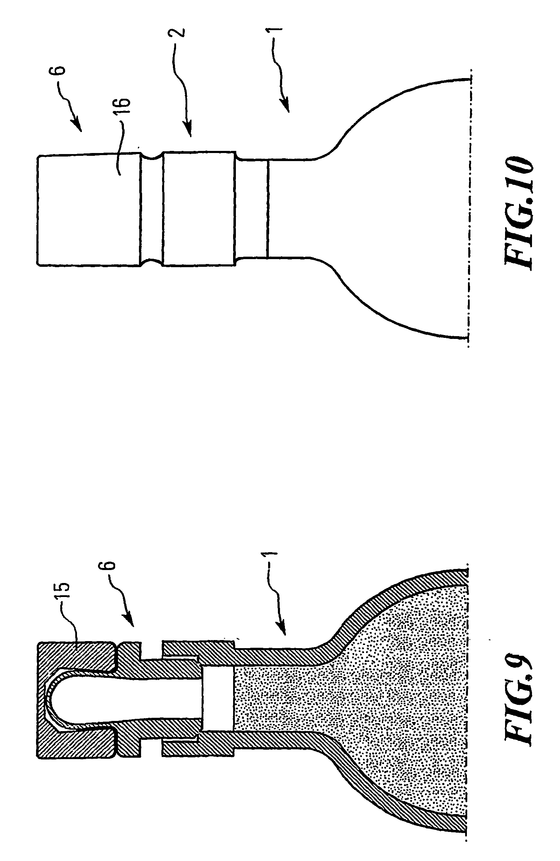

Fig. 9 zeigt noch, dass die relativ dünnwandige Kalotte 14 durch eine aufgesetzte Schutzkappe 15 abgedeckt werden kann. Fig. 10 zeigt die Flasche mit einer aufgesetzten Manschette 16. Es ist ersichtlich, dass sich das äußere Erscheinungsbild der Flasche nahezu nicht von einer herkömmlichen Weinflasche unterscheidet.

Will man die Flasche nun öffnen, kann man in den Spalt 10 ein Werkzeug einführen, mit dem man eine axiale Kraft auf den Verschlußkörper aufbringt, um diesen von dem Grundkörper 1 abzuheben. Die hierdurch erzeugten Spannungen konzentrieren sich in der Soll-Bruchstelle 12 und sorgen für ein definiertes Abreißen des Verschlußkörpers 6 von der Stufe 4 des Flaschenhalses 2.

## Patentansprüche

1. Verfahren zum Herstellen von Flaschen, insbesondere Getränkeflaschen, die einen Flaschengrundkörper (1) und einen Verschlußkörper (6) aufweisen, wobei der Flaschengrundkörper aus Glas besteht, wobei man den Verschlusskörper (6) ebenfalls aus Glas herstellt und diesen Verschlusskörper (6) monolithisch mit dem Flaschengrundkörper (1) verbindet, **dadurch gekennzeichnet, dass** dabei eine Sollbruchstelle (12) erzeugt wird.

2. Verfahren nach Anspruch 1, **dadurch gekennzeichnet, dass** das monolithische Verbinden durch einen Aufschmelzprozess erfolgt.

3. Flasche, insbesondere Getränkeflasche, mit einem Flaschengrundkörper (1) und einem Verschlusskörper (6), wobei der Flaschengrundkörper aus Glas besteht, wobei der Verschlusskörper (6) ebenfalls aus Glas besteht und der Verschlußkörper (6) mit dem Flaschengrundkörper (1) monolithisch verbunden ist, **dadurch gekennzeichnet, dass** an der Stelle des monolithischen Verbindens eine Soll-Bruchstelle (12) erzeugt ist.

4. Flasche nach Anspruch 3, **dadurch gekennzeichnet, dass** der Flaschengrundkörper (1) einen Flaschenhals (2) aufweist, der an seinem offenen Ende zur Aufnahme des Verschlusskörpers eine Stufenbohrung aufweist, dergestalt, dass die Soll-Bruchstelle zwischen der nach innen ragenden Stufe (4) des Flaschengrundkörpers (1) und dem Verschlußkörper (6) gebildet ist.

5. Flasche nach Anspruch 4, **dadurch gekennzeichnet, dass** zur Bildung der Soll-Bruchstelle (12) der Verbindungsbereich zwischen dem Flaschengrundkörper (1) und dem Verschlußkörper (6) durch eine auf einer Fläche (8) stehende Kante (5) gebildet wird, wobei die Wandstärke des Flaschengrundkörpers (1) im Bereich des Flaschenhalses (2), ebenso wie die Wandstärke des Verschlusskörpers (6) verhältnismäßig groß ist, während die Wandstärke der Soll-Bruchstelle (12) demgegenüber klein ist.

6. Flasche nach Anspruch 5, **dadurch gekennzeichnet, dass** die Wandstärke des Flaschenhalses (2) und des Verschlußkörpers (6) mindestens 4mm beträgt.

7. Flasche nach einem der Ansprüche 3 bis 6, **dadurch gekennzeichnet, dass** der Verschlußkörper (6) mit Abstand zu dem freien Ende (3) des Flaschenhalses (2) des Flaschengrundkörpers (1) einen radial abstehenden umlaufenden Flansch (9) aufweist.

8. Flasche nach einem der Ansprüche 3 bis 7, **dadurch gekennzeichnet, dass** der Verschlußkörper (6) in seinem Bereich oberhalb des Flansches (9) in einen dünnwandigen Befüll- und Verschließabschnitt (7) mündet, der zum Befüllen der Flasche stimseitig offen ist und nach Befüllen der Flasche ähnlich einer Ampulle durch Hitzeeinwirkung zu einer Kalotte (14) verschließbar ist.

9. Flasche nach einem der Ansprüche 3 bis 8, **dadurch gekennzeichnet, dass** der Befüll- und Verschließabschnitt (7) des Verschlußkörper (6) vor dem Verbinden mit dem Flaschengrundkörper (1) die Form eines geschlossenen Torpedos aufweist.

10. Flasche nach einem der Ansprüche 3 bis 9, **dadurch gekennzeichnet, dass** der als Torpedo ausgebildete Befüll- und Verschließabschnitt (7) des Verschlußkörpers (6) mit einer umlaufenden Schwächungslinie (11) ausgebildet ist, mit Hilfe derer die Spitze des Befüll- und Verschließabschnitts (7) zum Befüllen der Flasche absprengbar ist.

11. Verfahren zum Abfüllen von Getränken in eine Flasche nach einem der Ansprüche 3 bis 10, **dadurch gekennzeichnet, dass** die Flasche mit Flaschengrundkörper (1) und monolithisch verbundenem Verschlußkörper (6) angeliefert wird, wonach eine Spitze des Befüll- und Verschließabschnitts (7) entfemt wird, das Getränk über den Befüll- und Verschließbereich des Verschlußkörpers in die Flasche eingefüllt wird, wonach der Befüll- und Verschließbereich nach Art einer Ampulle durch Hitzeeinwirkung verschlossen wird.

12. Verfahren zum Öffnen einer Flasche nach einem der Ansprüche 3 bis 11, **dadurch gekennzeichnet, dass** man mit einem Werkzeug zwischen das stimseitig freie Ende (3) des Flaschenhalses (2), des Flaschengrundkörpers (1) und unter den radial abstehenden Flansch (9) des Verschlußkörpers (6) greift und dadurch eine axiale Kraft auf den Verschlußkörper (6) aufbringt, die zum Abreißen des Verschlußkörpers (6) von der nach innen gerichteten Stufe (4) des Flaschenhalses (2) des Flaschengrundkörpers (1) führt.

## Claims

1. A method for producing bottles, especially beverage bottles, comprising a basic bottle body (1) and a closure body (6), the basic bottle body consisting of glass, the closure body (6) being also made from glass and said closure body (6) being connected in a monolithic manner to the basic bottle body (1), **characterized in that** a predetermined breaking point (12) is produced in this process.

2. The method according to claim 1, **characterized in that** the monolithic connection is established by a fusion process.

3. A bottle, especially beverage bottle, comprising a basic bottle body (1) and a closure body (6), the basic bottle body consisting of glass, the closure body (6) also consisting of glass and the closure body (6) being connected in a monolithic manner to the basic bottle body (1), **characterized in that** a predetermined breaking point (12) is produced at the place of the monolithic connection.

4. The bottle according to claim 3, **characterized in that** the basic bottle body (1) comprises a bottle neck (2) which comprises a stepped hole at the open end thereof for receiving the closure body, in such a manner that the predetermined breaking point is formed between the inwardly projecting step (4) of the basic bottle body (1) and the closure body (6).

5. The bottle according to claim 4, **characterized in that** for the formation of the predetermined breaking point (12) the connection portion between the basic bottle body (1) and the closure body (6) is formed by an edge (5) standing on a surface (8), the wall thickness of the basic bottle body (1) in the area of the bottle neck (2), just like the wall thickness of the closure body (6), being relatively great whereas in comparison therewith the wall thickness of the predetermined breaking point (12) is small.

6. The bottle according to claim 5, **characterized in that** the wall thickness of the bottle neck (2) and the closure body (6) is at least 4 mm.

7. The bottle according to any one of claims 3 to 6, **characterized in that** the closure body (6) comprises a radially projecting surrounding flange (9) at a distance from the free end (3) of the bottle neck (2) of the basic bottle body (1).

8. The bottle according to any one of claims 3 to 7, **characterized in that** the closure body (6) in its area above the flange (9) terminates in a thin-walled filling and closing section (7) which is open at the front side for filling the bottle and, after the bottle has been filled, is closable in the manner of an ampoule by the action of heat to obtain a calotte (14).

9. The bottle according to any one of claims 3 to 8, **characterized in that** the filling and closing section (7) of the closure body (6) has the shape of a closed torpedo before connection to the basic bottle body (1).

10. The bottle according to any one of claims 3 to 9, **characterized in that** the torpedo-shaped filling and closing section (7) of the closure body (6) is formed with a surrounding weakening line (11) with the help of which the tip of the filling and closing section (7) can be broken off for filling the bottle.

11. A method for filling beverages into a bottle according to any one of claims 3 to 10, **characterized in that** the bottle is supplied with basic bottle body (1) and monolithically connected closure body (6), whereupon a tip of the filling and closing section (7) is removed, the beverage is filled into the bottle via the filling and closing portion of the closure body, whereupon the filling and closing portion is sealed in the manner of an ampoule by the action of heat.

12. The method for opening a bottle according to any one of claims 3 to 11, **characterized in that** a tool is used for gripping between the free front-side end (3) of the bottle neck (2), the basic bottle body (1) and below the radially projecting flange (9) of the closure body (6) and an axial force is thereby applied to the closure body (6), whereby the closure body (6) is torn off from the inwardly oriented step (4) of the bottle neck (2) of the basic bottle body (1).

## Revendications

1. Procédé pour fabriquer des bouteilles, en particulier des bouteilles pour boissons, qui présentent un corps de base de bouteille (1) et un corps de fermeture (6), étant précisé que le corps de base de bouteille est en verre, qu'on fabrique le corps de fermeture (6) en verre, lui aussi, et qu'on le relie de manière monolithique au corps de base (1), **caractérisé en ce qu'**on réalise un point de rupture (12).

2. Procédé selon la revendication 1, **caractérisé en ce que** la liaison monolithique se fait par fusion.

3. Bouteille, en particulier bouteille pour boisson, présentant un corps de base de bouteille (1) et un corps de fermeture (6), étant précisé que le corps de base de bouteille est en verre, que le corps de fermeture (6) est en verre, lui aussi, et qu'il est relié de manière monolithique au corps de base (1), **caractérisée en ce qu'**à l'endroit de la liaison monolithique, un point de rupture (12) est réalisé.

4. Bouteille selon la revendication 3, **caractérisée en ce que** le corps de base de bouteille (1) comporte un goulot (2) qui présente à son extrémité ouverte, pour recevoir le corps de fermeture, un perçage étagé, de telle sorte que le point de rupture est formé entre l'étagement (4) du corps de base de bouteille (1) saillant vers l'intérieur et le corps de fermeture (6).

5. Bouteille selon la revendication 4, **caractérisée en ce que** pour former le point de rupture (12), la zone de liaison entre le corps de base de bouteille (1) et le corps de fermeture (6) est formée par un bord (5) posé sur une surface (8), l'épaisseur de paroi du corps de base (1) dans la zone du goulot (2) et celle du corps de fermeture (6) étant relativement grandes alors que l'épaisseur de paroi du point de rupture (12) est petite, au contraire.

6. Bouteille selon la revendication 5, **caractérisée en ce que** l'épaisseur de paroi du goulot (2) et du corps de fermeture (6) est d'au moins 4 mm.

7. Bouteille selon l'une des revendications 3 à 6, **caractérisée en ce que** le corps de fermeture (6) présente, à une certaine distance de l'extrémité libre (3) du goulot (2) du corps de base de bouteille (1), une collerette circulaire (9) saillant radialement.

8. Bouteille selon l'une des revendications 3 à 7, **caractérisée en ce que** le corps de fermeture (6), dans sa zone située au-dessus de la collerette (9), se termine par une section de remplissage et de fermeture à paroi mince (7) qui est ouverte côté frontal en vue du remplissage de la bouteille et qui, après le remplissage, est apte à être fermée à la manière d'une ampoule pour former une calotte (14) grâce à une action thermique.

9. Bouteille selon l'une des revendications 3 à 8, **caractérisée en ce que** la section de remplissage et de fermeture (7) du corps de fermeture (6), avant d'être reliée au corps de base de bouteille (1), présente la forme d'une torpille fermée.

10. Bouteille selon l'une des revendications 3 à 9, **caractérisée en ce que** la section de remplissage et de fermeture (7) du corps de fermeture (6) qui a la forme d'une torpille est pourvue d'une ligne d'affaiblissement circulaire (11) grâce à laquelle la pointe de ladite section de remplissage et de fermeture (7) peut être détachée en vue du remplissage de la bouteille.

11. Procédé pour mettre des boissons dans une bouteille selon l'une des revendications 3 à 10, **caractérisé en ce que** la bouteille est fournie avec un corps de base de bouteille (1) et un corps de fermeture (6) relié de manière monolithique, après quoi on enlève une pointe de la section de remplissage et de fermeture (7), on verse la boisson dans la bouteille par la zone de remplissage et de fermeture du corps de fermeture, puis on ferme ladite zone de remplissage et de fermeture à la manière d'une ampoule grâce à une action thermique.

12. Procédé pour ouvrir une bouteille selon l'une des revendications 3 à 11, **caractérisé en ce qu'**on place un outil entre l'extrémité libre (3), côté frontal, du goulot (2) du corps de base de bouteille (1) et la collerette saillant radialement (9) du corps de fermeture (6) et on exerce ainsi sur le corps de fermeture (6) une force axiale qui entraîne la rupture du corps de fermeture (6) par rapport à l'étagement dirigé vers l'intérieur (4) du goulot (2) du corps de base de bouteille (1).
